# FASCICULE DE BREVET EUROPEEN

(11) **EP 1 293 000 B1**
(45) Date de publication et mention de la délivrance du brevet: **01.02.2017**
(21) Numéro de dépôt: 01947079.8
(22) Date de dépôt: 15.06.2001
(51) Int. Cl.: C09D 7/12, C08K 3/04, C08K 3/22, C09D 127/16, H01M 4/139, H01M 10/0525, H01M 6/18, H01M 10/04, C09D 7/00, H01M 4/04

(54) **COMPOSITION ET METHODE POUR L'APPLICATION D'UN REVETEMENT SUR UN SUPPORT**
ZUSAMMENSETZUNG UND VERFAHREN ZUR BESCHICHTUNG EINES TRÄGERS
COMPOSITION AND METHOD FOR APPLYING A COATING ON A SUPPORT

(30) Priorité: 15.06.2000 CA 2312213
(43) Date de publication de la demande: 19.03.2003
(60) Demande divisionnaire: 12185208.1
(73) Titulaire: Hydro-Québec, Montréal, Québec H2Z 1A4 (CA)
(72) Inventeur: GUERFI, Abdelbast, Brossard, Québec J4X 1W2 (CA); BROCHU, Fernand, Longueuil, Québec J4L 3B1 (CA); MASSÉ, Monique, Longueuil, Québec J4L 4T9 (CA); ZAGHIB, Karim, Longueuil, Québec J4M 2M7 (CA)
(74) Mandataire: Goulard, Sophie
(86) Numéro de dépôt international: PCT/CA2001/000897
(87) Numéro de publication internationale: WO 2001/097303

(56) Documents cités:
- WO-A-99/44245
- WO-A-99/44247
- US-A- 5 910 532
- PATENT ABSTRACTS OF JAPAN vol. 1998, no. 01, 30 janvier 1998 (1998-01-30) & JP 09 231961 A (FUJI PHOTO FILM CO LTD), 5 septembre 1997 (1997-09-05)
- PATENT ABSTRACTS OF JAPAN vol. 1996, no. 04, 30 avril 1996 (1996-04-30) & JP 07 320750 A (SANYO ELECTRIC CO LTD), 8 décembre 1995 (1995-12-08)

## Description

La présente invention concerne une composition permettant d'appliquer, à basse température, un revêtement sur un support. L'invention concerne aussi une méthode utilisant la composition selon l'invention pour obtenir ledit revêtement sur un support.

Plus particulièrement, l'invention concerne la mise en oeuvre d'une méthode de fabrication d'électrodes ou de l'électrolyte pour batteries du type lithium-ion, selon laquelle on fait usage d'un mélange de solvants capable de disperser les composantes utilisées pour la formation des électrodes ou de l'électrolyte, lequel mélange est caractérisé en ce qu'il peut être évaporé à température peu élevée, notamment en utilisant l'infrarouge. La présente invention concerne aussi le développement d'une composition constituant ledit mélange

### ART ANTÉRIEUR

Lors de la préparation des électrodes ou de l'électrolyte pour les batteries lithiumion, on sait que l'on peut incorporer les éléments constituants des électrodes ou de l'électrolyte dans un solvant, notamment le N-méthyl pyrolidone, ci-après le NMP. Pour plus de détails on se référera aux demandes de brevets japonaises publiées sous les numéros 11-283612, 11-283626 et 11-273680, respectivement les 8 octobre 1999, le 15 octobre 1999 et le 15 octobre 1999. Le document JP-09-231961 décrit par ailleurs un procédé de préparation d'une électrode pour batterie lithium-ion selon lequel un revêtement est formé sur un support en utilisant une dispersion contenant le NMP et la méthyl éthyl cétone.

Le NMP est considéré comme un solvant fort et lourd, c'est-à-dire qu'il possède un point d'ébullition élevé, plus précisément 202°C. En raison du point d'ébullition élevé du solvant utilisé dans la préparation de la solution qui sera déposée sur un support, le séchage des électrodes ou de l'électrolyte nécessitera des températures élevées afin d'évaporer le solvant fort et lourd et déposer ainsi les composantes des électrodes ou de l'électrolyte sur un support, notamment un feuillard métallique ou de plastique. Le séchage peut aussi se faire en chauffant sous vide afin d'augmenter la tension de vapeur du solvant. Dans ce dernier cas, le coût de préparation des électrodes est augmenté. Le temps et la température de séchage sont deux éléments critiques pour assurer le contrôle de l'épandage des électrodes ainsi que de leur porosité et il existe donc un besoin urgent d'abaisser le coût de production des électrodes et de l'électrolyte en améliorant les facteurs temps et température de séchage.

### RÉSUMÉ DE L'INVENTION

L'invention a donc pour objet la mise oeuvre d'une composition de solvants assurant une bonne dispersion des composantes utilisées lors de l'application d'un revêtement sur un support, notamment durant la préparation des électrodes ou de l'électrolyte utilisés dans une batterie de type lithium-ion.

L'invention a aussi pour objet le développement d'une dispersion des composantes des électrodes ou de l'électrolyte d'une batterie de type lithium-ion dont la température d'évaporation est peu élevée.

L'invention a aussi pour objet la mise au point d'une méthode pour la réalisation d'un revêtement sur un support, en utilisant la composition de solvants selon l'invention sous forme de dispersion des composantes du revêtement.

L'invention a aussi pour objet le développement d'un solvant ou d'un mélange de solvants qui peut à la fois solubiliser le liant utilisé dans la composition des électrodes et qui possède une température d'évaporation peu élevée.

Un autre objet de invention réside dans l'amélioration de l'interface résultant en une bonne adhésion entre le revêtement et le support à la suite de l'absence de bulles à l'interface.

Un autre objet de invention réside dans la production d'un revêtement sur un support dont l'adhérence sur le support est telle que le revêtement ne peut pratiquement pas être pelé.

L'invention concerne une composition défini selon la revendication 1 permettant d'appliquer un revêtement sur un support à basse température à partir d'une dispersion dans la composition, d'au moins une composante à déposer sur le support, la composition comprenant au moins un solvant fort et lourd dont la température d'ébullition est supérieure à 150°C environ, et un solvant faible dont la température d'ébullition est inférieure à 100°C environ, le solvant fort et lourd et le solvant faible, constituant un mélange qui s'évapore à une température inférieure à 100°C environ.

La composition peut aussi comprendre un diluant dont la température d'ébullition est inférieure à 80°C environ, ce dernier ayant la propriété d'augmenter la capacité de solubilisation du mélange et de faciliter l'évaporation du solvant fort à basse température.

Selon une réalisation préférée de l'invention, le mélange peut s'évaporer à l'infrarouge pour ne laisser que la composante constituant le revêtement sur le support.

Le solvant fort et lourd est choisi parmi la N-méthyl pyrolidone et le cyclopentanone, et le solvant faible est de préférence choisi parmi l'acétone ou l'éthyl acétate, tandis que le diluant est choisi parmi le toluène ou le benzène.
Selon une autre réalisation préférée, en rapport volumique, le mélange comprend moins de 20% de solvant fort, entre 40 et 60% de solvant faible et entre 15 et 25% de diluant, et la composante est présente dans la dispersion à raison de 0,015g/cc à 0,04 g/cc de mélange. Le rapport en pourcentage volumique solvant faible:diluant se situe de préférence entre 80/20 et 65/25.

Selon une autre réalisation préférée, la composition selon l'invention peut aussi comprendre un liant de la composante, notamment du polyvinylidène fluoré.

L'invention concerne une dispersion dans la composition selon l'invention, de la composante à déposer sur un support, ladite composante pouvant comprendre une poudre de graphite, et le rapport massique entre la poudre de graphite et la composition selon l'invention peut varier entre 60:10 et 90:10. La composante peut aussi comprendre de l'oxyde de cobalt.

L'invention concerne aussi une méthode d'application d'un revêtement sur un support défini selon la revendication 10 caractérisé par les étapes suivantes
(a) on prépare une composition comprenant au moins un solvant fort et lourd dont la température d'ébullition est supérieure à 150°C environ, et un solvant faible dont la température d'ébullition est inférieure à 100°C environ, le solvant fort et le solvant faible étant présents dans des proportions propres à constituer un mélange qui s'évapore à une température inférieure à 100°C;
(b) on disperse une composante à appliquer sous forme de revêtement sur le dit support, dans ledit mélange;
(c) on épand la dispersion obtenue en (b) sur ledit support; et
(d) on sèche la dispersion pour obtenir ledit revêtement.

De préférence, on sèche la dispersion à une température inférieure à 100°C, notamment à l'aide d'un élément chauffant, par exemple une lampe infrarouge, avec ou sans ajout d'un autre élément chauffant. Lorsque le support est constitué d'un polymère réticulable, on peut aussi ajouter un chauffage à l'ultraviolet pour réticuler ledit polymère. À l'étape (a) on peut aussi ajouter un liant de la composante, dans ladite composition.

Selon une autre réalisation préférée de l'invention, on solubilise d'abord le liant dans le solvant fort et lourd, on mélange ensuite le solvant faible avec un diluant, et on mélange ensuite le tout.

Selon une autre réalisation de l'invention, le support est une électrode ou un électrolyte sous forme de film pour générateur électrochimique rechargeable.

L'invention peut être mise en oeuvre dans un dispositif permettant l'application du revêtement sur un support sous forme de film comprenant
une source de film support ;
un bac d'alimentation conçu pour contenir une dispersion selon l'invention ;
un moyen dérouleur faisant en sorte de faire circuler le film support au voisinage du bac d'alimentation ;
un moyen permettant de déverser en continu une quantité prédéterminée de dispersion sur le film support au passage de ce dernier dans le voisinage du bac d'alimentation ;
un moyen récepteur, et un moyen enrouleur transmettant en continu le film support et son revêtement au moyen récepteur ;
un moyen moteur agencé pour faire fonctionner le moyen dérouleur, le moyen récepteur et le moyen enrouleur ; et
un dispositif de chauffage permettant d'évaporer le contenu liquide de la dispersion à une température inférieure à 100°C laissant un revêtement solide sur le film support.

Le dispositif de chauffage comprend de préférence une lampe à infrarouge.

Dans le cas où le film support est constitué d'un polymère réticulable, le dispositif de chauffage peut aussi comprendre au moins une lampe à l'ultraviolet permettant de réticuler le polymère réticulable si ce dernier contient un faible pourcentage, par exemple moins de 1%, de photoinitiateur. Si le polymère réticulable contient un faible pourcentage, par exemple moins de 1%, d'un thermoinitiateur, la réticulation peut se faire à l'aide de la lampe infrarouge ou d'un élément chauffant.

Selon une autre réalisation le bac d'alimentation comporte un moyen permettant d'ajuster la largeur ainsi que l'épaisseur d'un dépôt de la dispersion sur le film support selon des paramètres prédéterminés.

### BRÈVE DESCRIPTION DES DESSINS

Dans les dessins qui illustrent l'invention,
la figure 1 est un spectre par analyse de masse de l'acétone;
la figure 2 est un spectre similaire, du toluène;
la figure 3 est un spectre aussi similaire du N-méthyl pyrolidone;
la figure 4 est un spectre correspondant d'un mélange 20 - 20 - 60 de toluène, de N-méthyl pyrolidone et d'acétone; et
la figure 5 est une vue en perspective d'un dispositif utilisé pour déposer un revêtement sur un support utilisant la composition selon l'invention.

### DESCRIPTION DÉTAILLÉE DE L'INVENTION

Selon une réalisation préférée, on a développé un mélange de solvants à composition ternaire. Un solvant faible ainsi qu'un diluant est ajouté au solvant fort. Le solvant faible a une température d'évaporation autour de 65°C comme l'acétone. Ce dernier a la propriété d'entraîner le solvant fort durant l'évaporation à des températures inférieures à celle du solvant fort. Le diluant est le solvant qui augmente d'une part la solubilité du liant et d'autre part la tendance à l'évaporation du solvant fort. Le séchage de l'électrode ou de l'électrolyte se fait à l'aide de lampes infrarouge directement sur la ligne d'épandage.

Le liant est solubilisé dans le solvant fort normalement à sa concentration maximale (mélange A). Un mélange (B) de solvant faible et du diluant est préparé. Le mélange (B) est ajouté au mélange (A) pour former le solvant d'épandage (C). Le pourcentage de chaque solvant dans le mélange dépend des performances du nouveau mélange d'une part et de la caractéristique solubilisation du solvant fort d'autre part. Dans un triangle où le solvant fort ne dépasse pas les 20%, le solvant faible peut varier entre 40 et 60% et le diluant peut varier entre 15 et 25% dans un rapport liant mélange (C) qui peut varier entre 0.015g/cc à 0.04g/cc.

On a effectué des analyses des solvants individuels par un système d'échantillonneur d'espace de tête HP7694 (Agilent technologie) couplé à un chromatographe en phase gazeuse GC6890 (aussi d'Agilent) pour l'injection et la séparation des espèces. La détection s'est effectuée avec l'aide d'un spectromètre de masse HP5973 (aussi d'Agilent) en utilisant le mode d'analyse « total ions ». La séparation des composés est effectuée sur une colonne polaire Stabilwax^{®} 60mx0,25mmID avec une épaisseur de film de 0,25 µm (Restek).

On a préparé un mélange dont les proportions volumiques sont 20% NMP, 60% acétone et 20% toluène. Les températures d'évaporation de ces solvant sont: 202°C (NMP), 56° C (acétone) et 110°C (toluène). Ce mélange a été chauffé à 80°C pendant 12h. Tout le liquide a été évaporé et un résidu de type polymère est obtenu.

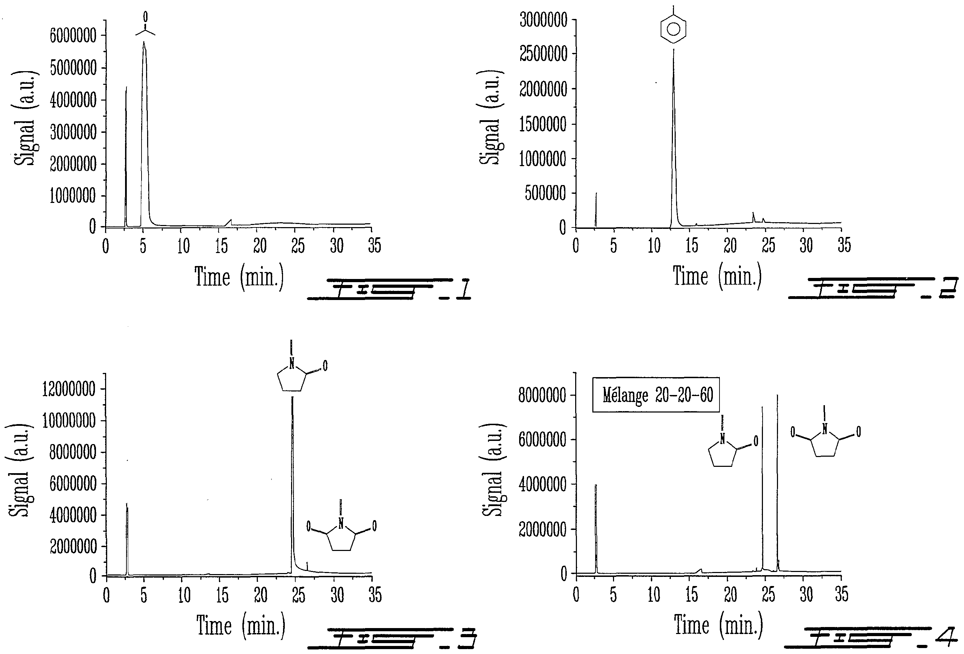

Le spectre d'analyse de masse par GC a montré une nouvelle phase (Fig.4) différente des spectres des solvants testés individuellement; acétone (Fig. 1), toluène (Fig. 2) et NMP (Fig. 3). Par comparaison, après 1h à 80°C, l'évaporation est total de l'acétone, 22% pour le toluène, alors qu'aucune évaporation a été remarqué pour le NMP.

Le séchage de l'électrode se fait à l'aide d'une nouvelle méthode qui utilise une lampe infrarouge. Cette méthode a été mise au point afin d'augmenter l'efficacité du séchage. Cette nouvelle méthode permet d'évaporer le solvant dans un temps plus court.

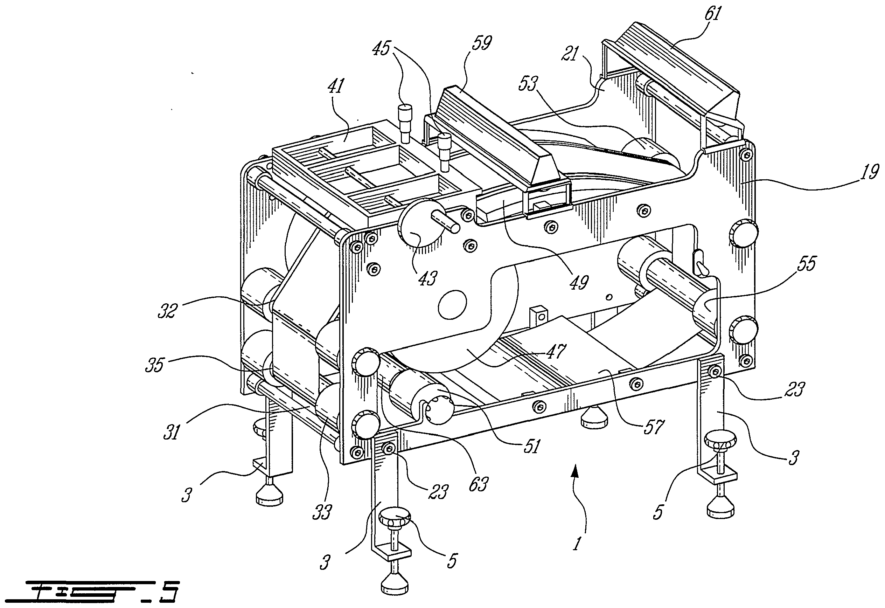

La figure 5 illustre un prototype de machine réalisée au laboratoire avec laquelle les exemples de ce brevet ont été réalisés.

En se référant à la figure 5, on verra que le dispositif utilisé pour la réalisation préférée de l'invention comprend un bâti 1, monté sur quatre pieds 3, ajustables en 11, et conçu pour y disposer les parties constitutives du dispositif. Le dispositif en soi comporte deux montants longitudinaux 19, 21 disposée en parallèle et montés en 23 sur les pieds 3.

Le dispositif comprend ensuite une source de film support sous forme d'un enroulement 31 de film support monté sur un rouleau 33.

Comme on le voit sur l'illustration de la figure 5, le rouleau 33 est monté de façon connue entre les deux montants 19, 21 à une extrémité inférieure de ces derniers, et en rotation libre, pour permettre de librement dérouler le film support 35 ainsi qu'on le verra plus loin. Situé dans un mme plan vertical que le rouleau 31, on retrouve un rouleau d'appui 37, lui aussi monté de façon connue entre les deux montants 19, 21 et en rotation libre.

En tête du dispositif, on retrouve un bac d'alimentation 41 de structure conventionnelle et muni d'un système d'épandage non illustré, permettant de déverser en continu des quantités prédéterminées de la dispersion dont il est question plus haut et qui servira à produire un revêtement pour électrodes ou électrolytes sur le film support 35. On notera que le bac d'alimentation 41 comporte deux postes de commande, l'un 43 destiné à produire un dépôt de dispersion de largeur prédéterminée, et l'autre 45, assurant le déversement d'une quantité de dispersion assurant une épaisseur de revêtement prédéterminée. Le bac d'alimentation 41 est fixé de façon connue entre les deux montants 19,21 ainsi qu'on le voit sur l'illustration de la figure 5.

Sous le bac d'alimentation 41, on retrouve un rouleau d'appui 47 de grand diamètre et sur lequel le film support 35 reposera lors de son passage entre le bac d'alimentation et le rouleau d'appui 47. En amont du bac d'alimentation et fixé de façon connue, en partie supérieure des montants 19, 21, on a prévu un support d'appui 49, légèrement courbé, le tout afin de faciliter le glissement du film support revêtu vers la bobine d'enroulement 51 qu'on décrira plus en détail ci-après.

À l'extrémité opposée du dispositif, on a fixé en libre rotation, de façon connue, entre les deux montants 19, 21, deux rouleaux 53, 55 qui servent d'appui au film support lors du retour de ce dernier vers la bobine d'enroulement 51. On retrouve ensuite un support d'appui 57 placé sous le support 49 et sous lequel le film support revêtu se dirigera finalement vers la bobine d'enroulement 51.

Quant à cette dernière elle est fixé de façon connue en partie inférieure, entre les deux montants 19, 21, au voisinage du rouleau d'appui 47. Un moyen motorisé, non illustré, disposé dans le rouleau d'appui 47, entraînera la bobine d'enroulement 51, lorsque cette dernière est en frottement avec le rouleau d'appui 47. De cette façon, une fois l'extrémité du film support 35 fixée à la bobine d'enroulement 51, il suffira de mettre le dispositif en marche pour que le déroulement du film se fasse de façon continue.

Pour compléter le dispositif, il s'agit d'y prévoir une lampe à l'ultraviolet 59 et une lampe à l'infrarouge 61. La lampe à l'ultraviolet 59 est placée au-dessus du film support 35 à la sortie du bac d'alimentation et au-dessus du support d'appui 49. Quant à lampe à l'infrarouge 61, on la retrouve à l'extrémité du dispositif opposée au bac d'alimentation 41 et elle est orientée pour projeter son faisceau vers l'extrémité amont du support d'appui 49.

L'opération de ce dispositif s'effectue comme suit. On saisit l'extrémité d'un film support 35 monté sur la bobine d'enroulement 31, on déroule le film support en le faisant contourner le rouleau d'appui 37, on le glisse ensuite entre le bac d'alimentation 41 et le rouleau d'appui 47. Le film support contourne ensuite le support d'appui 49, les rouleaux 53,55, le support d'appui 57 pour finalement être fixé à la bobine d'enroulement 51 en s'assurant que le rouleau d'appui 47 est en friction en 63 avec la bobine d'enroulement 51 pour entraîner cette dernière. On met le moteur en marche, on allume la lampe infrarouge 61 et le cas échéant la lampe à l'ultraviolet 59, et on amorce le déversement de la dispersion sur le film support 35 après avoir ajusté la largeur et le débit.

Cette machine est aussi flexible pour différents types d'épandage : anode, cathode et électrolyte de différentes tailles, formes et distributions de particules. Elle permet d'utiliser différents modes de séchages tel que par exemple, à l'infrarouge, par élément chauffant, ou la combinaison des deux modes. Elle est aussi munie d'un système de lampe ultraviolet (UV) pour la réticulation des électrolytes. Dans le cas de la réticulation thermique, l'élément chauffant peut aussi jouer le rôle de réticulateur. La combinaison de la source UV et l'élément chauffant s'adapte facilement à ce type d'opération.

L'avantage du dispositif est de pouvoir obtenir des films de revêtement avec des quantités minimum de matériau actif d'environ 1g, ce qui favorise son utilisation à l'échelle laboratoire.

L'utilisation du mélange des solvants pour épandre des films, d'une part diminue la température de séchage et augmente la vitesse d'épandage.

D'autre part, il réduit aussi la zone de séchage.

L'invention va maintenant être illustrée à l'aide des exemples qui suivent donnés à titre non limitatif.

### EXEMPLES

### Exemple 1

Le liant PVDF polyvinylidène fluoré est solubilisé dans le NMP N-méthyl pyrolidone. Un mélange des solvants acétone/toluène à 80/20 est ajouté à la pâte PVDF-NMP pour former la composition d'épandage. La poudre du graphite est dispersée dans la composition d'épandage dans un ratio massique de 90 :10. Ce mélange est appliqué sur un collecteur de cuivre par la méthode Doctor Blade™. L'électrode est séchée par lampe infrarouge à 80°C.

L'électrode est montée dans une pile bouton de type 2035. Un séparateur Celgard™ 2300 imbibé d'électrolyte 1M LiPF6 + EC/DMC : 50/50 (carbonate d'éthylène + diméthylcarbonate) est utilisé.

Les tests électrochimiques ont été conduits à la température ambiante. Les courbes de décharge - charge ont été obtenues entre 0V et 2,5V en C/24. L'efficacité coulombique du premier cycle est de 88%. Ce résultat est comparable à celui obtenu par des électrodes préparées par la composite (graphite-PVDF-NMP) avec séchage à 140°C sous vide.

### Exemple 2

### (pas selon l'invention)

Dans la même composition d'épandage que celle utilisée dans l'exemple 1, on disperse en premier le noir de carbone puis on disperse la poudre de l'oxyde de cobalt dans un ratio massique; oxyde/noir de carbone/PVDF de 80/10/10. Ce mélange est appliqué sur un collecteur d'aluminium par la méthode Doctor Blade™. L'électrode est séchée parallèlement par lampe infrarouge à 80 °C. L'électrode est montée dans une pile bouton de type 2035. Un séparateur Celgard™ 2300 imbibé d'électrolyte 1M LiPF6 + EC/DMC : 50/50 (carbonate d'éthylène + diméthylcarbonate) est utilisé.

Les tests électrochimiques ont été conduits à la température ambiante. Les courbes de décharge - charge ont été obtenues entre 2.5V et 4.2V en C/24.

Il est entendu que l'invention entend recouvrir toutes modifications évidentes à l'homme de l'art à la condition bien entendu qu'elles soient prévue par les revendications qui suivent.

## Revendications

1. Dispersion d'au moins une composante à déposer sur un support dans une composition, **caractérisée en ce que** :
- ladite composition comprend au moins un solvant fort et lourd choisi parmi la N-méthylpyrolidone et le cyclopentanone, un solvant faible dont la température d'ébullition est inférieure à 100°C, le solvant fort et lourd et le solvant faible constituant un mélange qui s'évapore à une température inférieure à 100°C, et un diluant choisi parmi le benzène et le toluène, ledit diluant ayant la propriété d'augmenter la capacité de solubilisation du mélange et de faciliter l'évaporation du solvant fort à basse température, et
- la composante à déposer est une composante d'électrode d'une batterie du type lithium-ion comprenant une poudre de graphite.

2. Dispersion selon la revendication 1, **caractérisée en ce que** le solvant faible est choisi parmi l'acétone ou l'éthyl acétate.

3. Dispersion selon la revendication 1, **caractérisée en ce qu'**en rapport volumique, le mélange comprend moins de 20% de solvant fort, entre 40 et 60% de solvant faible et entre 15 et 25% de diluant.

4. Dispersion selon la revendication 1, **caractérisée en ce que** la teneur en composante à déposer est de 0,015g/cc à 0,04 g/cc de composition.

5. Dispersion selon la revendication 1, **caractérisée en ce que** le rapport en pourcentage volumique solvant faible: diluant se situe entre 80/20 et 65/25.

6. Dispersion selon la revendication 1, **caractérisée en ce que** la composition comprend en outre un liant de ladite composante.

7. Dispersion selon la revendication 6, **caractérisée en ce que** le liant comprend du polyvinylidène fluoré.

8. Dispersion selon la revendication 1, **caractérisée en ce que** le rapport massique entre la poudre de graphite et ladite composition varie entre 60:10 et 90:10.

9. Dispersion selon la revendication 1, **caractérisée en ce que** ladite composante comprend en outre de l'oxyde de cobalt.

10. Procédé d'application d'un revêtement sur un support comprenant les étapes suivantes :
(a) on prépare une composition comprenant au moins un solvant fort et lourd choisi parmi la N-méthylpyrolidone et le cyclopentanone, un solvant faible dont la température d'ébullition est inférieure à 100°C, le solvant fort et le solvant faible étant présents dans des proportions propres à constituer un mélange qui s'évapore à une température inférieure à 100°C, un diluant choisi parmi le benzène et le toluène, ledit diluant ayant la propriété d'augmenter la capacité de solubilisation du mélange et de faciliter l'évaporation du solvant fort à basse température, et un liant de ladite composante à ladite composition ;
(b) on disperse une composante à appliquer sous forme de revêtement sur le dit support, dans ledit mélange ;
(c) on épand la dispersion obtenue en (b) sur ledit support ; et (d) on sèche la dispersion pour obtenir ledit revêtement,
**caractérisé en ce que** :
- ladite composante à déposer est une composante d'électrode d'une batterie du type lithium-ion comprenant une poudre de graphite,
- à l'étape (a), on solubilise d'abord le liant dans le solvant fort et lourd, on mélange ensuite le solvant faible avec un diluant, et on mélange ensuite le tout.

11. Procédé selon la revendication 10, **caractérisé en ce qu'**on sèche ladite dispersion à une température inférieure à 100°C.

12. Procédé selon la revendication 10, **caractérisé en ce qu'**on sèche ladite dispersion à l'aide d'un élément chauffant et/ou d'une lampe à infrarouge.

13. Procédé selon la revendication 10, **caractérisé en ce que** le support est une électrode sous forme de film pour générateur électrochimique rechargeable.

## Patentansprüche

1. Dispersion mindestens einer auf einem Träger in einer Zusammensetzung aufzubringenden Komponente, **dadurch gekennzeichnet, dass**:
- die Zusammensetzung mindestens ein starkes und schweres Lösungsmittel, ausgewählt aus dem N-Methylpyrolidon und dem Cyclopentanon, ein schwaches Lösungsmittel, dessen Siedetemperatur unter 100 °C ist, wobei das starke und schwere Lösungsmittel und das schwache Lösungsmittel ein Gemisch darstellen, das bei einer Temperatur unter 100°C verdampft, und einen Verdünner, ausgewählt aus dem Benzen und dem Toluen, wobei der Verdünner die Eigenschaft hat, die Solubilisierungsfähigkeit des Gemischs zu erhöhen und das Verdampfen des starken Lösungsmittels bei niedriger Temperatur zu erleichtern, umfasst, und
- die aufzubringende Komponente eine Elektrodenkomponente einer Batterie vom Typ Lithiumion ist, umfassend ein Graphitpulver.

2. Dispersion nach Anspruch 1, **dadurch gekennzeichnet, dass** das schwache Lösungsmittel aus dem Aceton oder dem Ethylacetat ausgewählt ist.

3. Dispersion nach Anspruch 1, **dadurch gekennzeichnet, dass**, in Volumenverhältnis, das Gemisch weniger als 20 % starkes Lösungsmittel, zwischen 40 und 60 % schwaches Lösungsmittel und zwischen 15 und 25 % Verdünner umfasst.

4. Dispersion nach Anspruch 1, **dadurch gekennzeichnet, dass** der Gehalt aufzubringender Komponente 0,015 g/cc bis 0,04 g/cc Zusammensetzung beträgt.

5. Dispersion nach Anspruch 1, **dadurch gekennzeichnet, dass** das Verhältnis Volumenprozent schwaches Lösungsmittel: Verdünner zwischen 80/20 und 65/25 liegt.

6. Dispersion nach Anspruch 1, **dadurch gekennzeichnet, dass** die Zusammensetzung ferner ein Bindemittel der Komponente umfasst.

7. Dispersion nach Anspruch 6, **dadurch gekennzeichnet, dass** das Bindemittel fluoridiertes Polyvinyliden umfasst.

8. Dispersion nach Anspruch 1, **dadurch gekennzeichnet, dass** das Massenverhältnis zwischen dem Graphitpulver und der Zusammensetzung zwischen 60:10 und 90:10 schwankt.

9. Dispersion nach Anspruch 1, **dadurch gekennzeichnet, dass** die Komponente auch Kobaltoxid umfasst.

10. Verfahren zum Aufbringen einer Beschichtung auf einen Träger, umfassend die folgenden Schritte:
(a) Vorbereiten einer Zusammensetzung, umfassend mindestens ein starkes und schweres Lösungsmittel, ausgewählt aus dem N-Methylpyroilidon und dem Cyclopentanon, ein schwaches Lösungsmittel, dessen Siedetemperatur unter 100 °C ist, wobei das starke Lösungsmittel und das schwache Lösungsmittel in Verhältnissen vorhanden sind, die imstande sind, ein Gemisch darzustellen, das bei einer Temperatur von unter 100 °C verdampft, einen Verdünner, ausgewählt aus dem Benzen und dem Toluen, wobei der Verdünner die Eigenschaft hat, die Solubilisierungsfähigkeit des Gemischs zu erhöhen und das Verdampfen des starken Lösungsmittels bei niedriger Temperatur zu erleichtern, und ein Bindemittel der Komponente mit der Zusammensetzung,
(b) Dispergieren einer in Form von Beschichtung auf dem Träger aufzubringenden Komponente in dem Gemisch,
(c) Verteilen der in (b) erhaltenen Dispersion auf dem Träger und (d) Trocknen der Dispersion, um die Beschichtung zu erhalten,
**dadurch gekennzeichnet, dass**:
- die aufzubringende Komponente eine Elektrodenkomponente einer Batterie vom Typ Lithiumion ist, umfassend ein Graphitpulver,
- in Schritt (a) zunächst das Bindemittel in dem starken und schweren Lösungsmittel solubilisiert wird und dann das schwache Lösungsmittel mit einem Verdünner gemischt wird und dann alles gemischt wird.

11. Verfahren nach Anspruch 10, **dadurch gekennzeichnet, dass** die Dispersion bei einer Temperatur von unter 100 °C getrocknet wird.

12. Verfahren nach Anspruch 10, **dadurch gekennzeichnet, dass** die Dispersion mit Hilfe eines Heizelements und/oder einer Infrarotlampe getrocknet wird.

13. Verfahren nach Anspruch 10, **dadurch gekennzeichnet, dass** der Träger eine Elektrode in Folienfom für wiederaufladbaren elektrochemischen Generator ist.

## Claims

1. A dispersion of at least one component to be deposited on a support in a composition, **characterized in that**:
- said composition comprises at least one strong and heavy solvent chosen from among N-methylpyrrolidone and cyclopentanone, a weak solvent having a boiling temperature below 100°C, the strong and heavy solvent and the weak solvent constituting a mixture that evaporates at a temperature below 100°C, and a diluent chosen from among benzene and toluene, said diluent having the property of increasing the solubilization capacity of the mixture and facilitating the evaporation of the strong solvent at a low temperature, and
- the component to be deposited is an electrode component of a battery of the lithium-ion type comprising a graphite powder.

2. The dispersion according to claim 1, **characterized in that** the weak solvent is chosen from among acetone and ethyl acetate.

3. The dispersion according to claim 1, **characterized in that** by volume ratio, the mixture comprises less than 20% strong solvent, between 40 and 60% weak solvent and between 15 and 25% diluent.

4. The dispersion according to claim 1, **characterized in that** the content level of component to be deposited is from 0.015 g/cc to 0.04 g/cc of composition.

5. The dispersion according to claim 1, **characterized in that** the weak solvent: diluent volume percentage ratio is situated between 80/20 and 65/25.

6. The dispersion according to claim 1, **characterized in that** the composition further comprises a binder of said composition.

7. The dispersion according to claim 6, **characterized in that** the binder comprises a fluorinated polyvinylidene.

8. The dispersion according to claim 1, **characterized in that** the weight ratio between the graphite powder and said composition varies between 60:10 and 90:10.

9. The dispersion according to claim 1, **characterized in that** said component further comprises cobalt oxide.

10. A method for applying a coating on a support comprising the following steps:
(a) a composition is prepared comprising at least a strong and heavy solvent chosen from among N-methylpyrrolidone and cyclopentanone, a weak solvent having a boiling temperature below 100°C, the strong solvent and the weak solvent being present in proportions able to form a mixture that evaporates at a temperature below 100°C, a diluent chosen from among benzene and toluene, said diluent having the property of increasing the solubilization capacity of the mixture and facilitating the evaporation of the strong solvent at a low temperature, and a binder of said component to said composition;
(b) a component to be applied is dispersed in the form of a coating on said support, in said mixture;
(c) the dispersion obtained in (b) is spread on said support; and
(d) the dispersion is dried to obtain said coating,
**characterized in that**:
- said component to be deposited is an electrode component of a battery of the lithium-ion type comprising a graphite powder,
- in step (a), the binder is first solubilized in the strong and heavy solvent, then the weak solvent is mixed with a diluent, and the whole is then mixed together.

11. The method according to claim 10, **characterized in that** said dispersion is dried at a temperature below 100°C.

12. The method according to claim 10, **characterized in that** said dispersion is dried using a heating element and/or an infrared bulb.

13. The method according to claim 10, **characterized in that** the support is an electrode in film form for a rechargeable electrochemical generator.
